# EUROPÄISCHE PATENTANMELDUNG

(11) **EP 4 425 143 A1**
(43) Veröffentlichungstag der Anmeldung: **04.09.2024**
(21) Anmeldenummer: 23159116.5
(22) Anmeldetag: 28.02.2023
(51) Int. Cl.: G01M 17/02

(54) **VORRICHTUNG UND VERFAHREN ZUR MESSUNG DER WULSTANPRESSKRAFT EINES REIFENS**

(71) Anmelder: Hofmann Maschinen- und Anlagenbau GmbH, 67550 Worms (DE)
(72) Erfinder: Aumann, Stephan, 67551 Worms (DE); Schlese, Eugen, 67240 Bobenheim-Roxheim (DE); Schoch, Ingo, 67549 Worms (DE)
(74) Vertreter: Tergau & Walkenhorst Intellectual Property GmbH

(57) **Zusammenfassung**

Die Erfindung betrifft eine Vorrichtung (100), ein Verfahren (200) und eine Anlage zur Messung der Wulstanpresskraft eines Reifens (110), insbesondere der eines Autoreifens, in Abhängigkeit vom Felgenschulterdurchmesser. Hierfür weist die Vorrichtung (100) eine zentrale Nabe (100) auf, an der eine Mehrzahl von Felgensegmenten (140), radial um den Umfang nach außen abstehend angebracht sind. Die Felgensegmente (140) weisen einen zur zentralen Nabe (116) gerichteten Steg (144) und einen von der zentralen Nabe (116) weg weisenden Anpressstempel (141) mit einer Auflagefläche (142) zum Kontakt mit einer Reifenschulter (112) ei-nes zu vermessenden Reifens (110) auf. Durch einen Verstellmechanismus wer-den die Felgensegmente (140) gemeinsam in radialer Richtung ausgesteuert und der Reifen (110) gespannt. Während des Spannens werden mittels Kraftaufneh-mern (134) die auf die Felgensegmente (140) wirkenden Rückstellkräfte und auch die Felgensegmentpositionen gemessen. In Kombination mit Geometrie und Positi-on der Felgensegmente (140) kann so die Wulstanpresskraft des Reifens (110) in Abhängigkeit vom Felgenschulterdurchmesser ermittelt werden.

## Beschreibung

Die Erfindung betrifft eine Vorrichtung, ein Verfahren, ein Felgensegment und eine Anlage zur Messung der Wulstanpresskraft eines Reifens, insbesondere der eines Autoreifens.

Vorrichtungen, Verfahren und Anlagen zur Messung der Wulstanpresskraft eines Reifens, insbesondere der eines Autoreifens, mit welchen die am Reifenwulst auftretende Anpresskraft auf die Felgenschulter in Abhängigkeit vom Felgenschulterdurchmesser ermittelt werden kann, sind im Stand der Technik, jedenfalls im Haus der Anmelderin, bekannt.

Die Wulstanpresskraft wird dabei über das Einwirken einer Reifenschulter auf die Außenflächen von massiven Felgensegmenten, welche gegen die Reifenschulter bewegt werden, ermittelt. Hierzu wird der durch die Außenflächen der Felgensegmente gebildete Ring, der sogenannte Felgenschulterdurchmesser, durch Bewegen der Felgensegmente radial nach außen vergrößert und die Reifenschulter gespannt. Durch Messung der auf die Felgensegmente wirkenden Rückstellkräfte kann bei Kenntnis der Geometrie und Position der Felgensegmente die Wulstanpresskraft des Reifens in Abhängigkeit vom Felgenschulterdurchmesser ermittelt werden.

Für einen sicheren Betrieb des Reifens auf einer Felge sollte die Wulstanpresskraft in Abhängigkeit vom Wulstdurchmesser innerhalb bestimmter Grenzen liegen. Ist sie zu klein, so besteht die Gefahr des Entlüftens oder Abwerfens während der Kurvenfahrt. Ist sie zu groß, so ergeben sich Schwierigkeiten bei der Montage des Reifens auf die Felge.

In der Praxis existiert eine große Menge verschiedener Reifentypen, die sich nicht zuletzt in ihren Abmessungen und der Gestaltung der Reifenschulter unterscheiden. Für eine zuverlässige und sichere Messung der Wulstanpresskraft müssen die Außenflächen der massiven Felgensegmente eine zur jeweiligen Reifenschulter möglichst passende Geometrie und Größe aufweisen. Die Felgensegmente müssen deshalb jeweils an den Reifentyp angepasst werden. Dies macht einen Wechsel der Felgensegmente notwendig. Nur so kann eine sichere und zuverlässiger Messung der Wulstanpresskraft erfolgen.

Im Sinne eines effizienten Betriebsablaufs ist deshalb eine zuverlässige und mit geringem Aufwand realisierbare Messung der Wulstanpresskraft unterschiedlicher Reifentypen besonders nutzbringend.

### Aufgabe

Aufgabe der vorliegenden Erfindung ist es, mit einem einzigen Maschinentyp mit möglichst geringem Aufwand die Wulstanpresskraft unterschiedlicher Reifentypen zuverlässig zu messen. Zu diesem Zweck sollen eine geeignete Vorrichtung, ein Felgensegment, ein mit der Vorrichtung durchführbares Verfahren und eine Anlage, mit der das Verfahren durchgeführt werden kann, angegeben werden.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht. Die Verwendung der Einzahl soll die Mehrzahl nicht ausschließen, was auch im umgekehrten Sinn zu gelten hat, soweit nichts Gegenteiliges offenbart ist. Im Folgenden werden einzelne Verfahrensschritte näher beschrieben. Die Schritte müssen nicht notwendigerweise in der angegebenen Reihenfolge durchgeführt werden und das zu schildernde Verfahren kann auch weitere, nicht genannte Schritte aufweisen.

In Bezug auf die Vorrichtung wird die Aufgabe erfindungsgemäß gelöst durch eine Vorrichtung mit den Merkmalen des Anspruchs 1. Demnach ist eine Vorrichtung zur Messung der Wulstanpresskraft eines Reifens, insbesondere der eines Autoreifens, vorgesehen, mit einer zentrale Nabe und einer Mehrzahl von Felgensegmenten, wobei die Felgensegmente radial um den Umfang nach außen abstehend an der zentralen Nabe angebracht sind, und wobei das jeweilige Felgensegment einen zur zentralen Nabe gerichteten Steg und einen von der zentralen Nabe weg weisenden Anpressstempel mit einer Auflagefläche zum Kontakt mit einer Reifenschulter eines zu vermessenden Reifens aufweist, und wobei benachbarte Stege gleichmäßig so voneinander beabstandet sind, dass der Abstand zwischen den benachbarten Stegen größer ist als der Abstand zwischen den entsprechenden benachbarten Anpressstempeln.

Weiterhin weist die Vorrichtung einen Verstellmechanismus auf, wobei die Felgensegmente über den Verstellmechanismus gemeinsam in jeweils radialer Richtung verschiebbar sind. Ferner weist die Vorrichtung mindestens einen Kraftaufnehmer auf, wobei der mindestens eine Kraftaufnehmer eingerichtet ist, auf die Felgensegmente wirkende Rückstellkräfte zu messen. Zudem weist die Vorrichtung optional Mittel zum Messen der Felgensegmentposition auf, wobei die Mittel zum Messen der Felgensegmentposition derart eingerichtet sind, dass sie die relativ zu einer Startposition eingenommene Position eines Felgensegments messen können.

Aus den auf die Felgensegmente wirkende Rückstellkräften kann auf die Wulstanpresskraft des Reifens geschlossen werden. Wenn der mittlere Bereich zwischen der Auflagefläche und dem der zentralen Nabe zugewandten Ende als Steg ausgebildet ist, wird die Montage des Felgensegments von Hand erleichtert, indem der Steg als Handgriff genutzt werden kann, an dem das Felgensegment festgehalten und in Montageposition gehalten werden kann, während es montiert wird. werden Materialeinsatz und damit das Gewicht des Felgensegments reduziert. Die Handhabbarkeit der Felgensegmente bei der Montage von Hand wird zudem durch den geringeren Materialeinsatz und die daraus resultierende Reduzierung des Gewichts verbessert. Ferner wird die Auswirkung des Eigengewichtes der Felgensegmente auf die Messung selbst minimiert, da auf die Felgensegmente wirkende gewichtsabhängige Querkräfte vermindert sind.

Wenn die jeweilige Auflagefläche des Felgensegments einen Ringabschnitt bildet und die Gesamtheit der Auflageflächen aller Felgensegmente einen Ring bildet, wird die Schulter einer Felge besonders realistisch nachgeahmt, auf welcher der zu messende Reifen im Betrieb montiert ist und so die Zuverlässigkeit der Messung weiter verbessert.

Wenn das jeweilige Felgensegment eine T-förmige Grundform besitzt, wird ein sicheres Halten des Felgensegments mit einer Hand ermöglicht. Zudem wird das Gewicht der Felgensegmente reduziert und so insgesamt die Handhabbarkeit bei der Montage verbessert.

Wenn die Felgensegmente im Bereich zwischen dem Steg und der Auflagefläche sowohl auf der Oberseite als auch auf der Unterseite jeweils eine Tasche aufweisen und die nach außen in Richtung der Auflagefläche verlängerte Schicht zwischen den Taschen die Anpresstempel bilden, wird das Gewicht der Felgensegmente weiter reduziert, die auf die Auflagefläche wirkende Anpresskraft des Reifens aber dennoch über Vollmaterial bis an die Messbacken weitergeleitet und so ungewollte Bauteilverformungen vermieden.

Wenn die Vorrichtung eine Mehrzahl von Messbacken aufweist, über die das jeweilige Felgensegment mit der zentralen Nabe verbunden ist und der jeweilige Kraftaufnehmer mit einer der Messbacken verbunden ist, müssen die Felgensegmente keine eigenen Kraftaufnehmer besitzen, was den Material- und Zeitaufwand der Umrüstung der Messvorrichtung auf andere Felgensegmente reduziert. Zum einen müssen insgesamt weniger Kraftaufnehmer verbaut werden, da ein Satz Messbacken für viele Sätze verschiedener Felgensegmente genutzt werden kann, zum anderen wird der Wartungsaufwand vermindert, da die Messbacken an der zentralen Nabe verbleiben und so weniger Umwelteinflüssen, wie bspw. Temperaturschwankungen oder mechanischen Einflüssen, unterliegen als die Felgensegmente selbst.

Wenn der Steg des Felgensegments an dem der Messbacke zugewandten Ende eine Montagefläche aufweist, kann das Felgensegment besonders sicher und wiederholgenau mit der Messbacke verbunden werden.

Wenn die äußere dem Reifen zugewandte Fläche der Felgensegmente mindestens zwei Montagebohrungen aufweist, die jeweils in eine der Taschen münden und zusätzlich der Steg der Felgensegmente mindestens zwei Montagekanäle aufweist, die in jeweils eine der Taschen münden und bis zur Montagefläche reichen und jeweils durch eine Montagebohrung und einen Montagekanal eine durchgehende Aussparung von der äußeren dem Reifen zugewandte Fläche des Felgensegments bis zur Montagefläche des Stegs gebildet wird, wird die Montagefläche für die Befestigung an den Messbacken über die Außenfläche des Felgensegments zugänglich.

Ein Wechsel der Felgensegmente ist so vereinfacht, da das Felgensegment mit einer Hand gehalten und ein entsprechendes Werkzeug durch die aus Montagebohrung und Montagekanal gebildete durchgehende Aussparung geführt werden kann.

Wenn der mindestens eine Kraftaufnehmer eine Brückenschaltung mit mindestens zwei Dehnungsmessstreifen aufweist, die mit einer Messbacke verbunden sind, werden durch Ausnutzen der Symmetrie der Brückenschaltung sowohl thermische Dehnungen bzw. Stauchungen der Messbacken als auch unerwünschte mechanische Dehnungen bzw. Stauchungen der Messbacken quer zur Messrichtung elektrisch kompensiert und so die Messung der Wulstanpresskraft erleichtert.

Wenn die Vorrichtung acht Felgensegmente und acht Messbacken aufweist, wobei vier der Messbacken Dehnungsmessstreifen aufweisen und wobei die an den Messbacken befestigten Felgensegmente jeweils um 45° versetzt zueinander angeordnet sind und wobei vier Dehnungsmessstreifen Teil einer Vollbrücke sind, wird das Signal der Messung von auf die Felgensegmente wirkenden Rückstellkräften weiter verstärkt und die elektrische Kompensation von Temperatur- und mechanischen Störeinflüssen weiter verbessert.

Wenn die Vorrichtung acht Felgensegmente und acht Messbacken aufweist, wobei die acht Messbacken Dehnungsmessstreifen aufweisen und die an den Messbacken befestigten Felgensegmente jeweils um 45° versetzt zueinander angeordnet sind und jeweils vier Dehnungsmessstreifen Teil einer Vollbrücke sind, wird das Signal der Messung von auf die Felgensegmente wirkenden Rückstellkräften noch weiter verstärkt und die elektrische Kompensation von Temperatur- und mechanischen Störeinflüssen noch weiter verbessert.

Wenn die Dehnungsmessstreifen so angeordnet sind, dass jeweils beide direkten Nachbarn eines Dehnungsmessstreifens einer ersten Vollbrücke, Dehnungsmessstreifen einer zweiten Vollbrücke sind, kann die Messung der auf die die Felgensegmente wirkenden Rückstellkräfte durch gegenseitige Kompensation noch weiter verbessert werden. Zudem wird die Ausfallsicherheit der Vorrichtung erhöht, da die Messung auch mit nur einer funktionierenden Vollbrücke durchgeführt werden kann.

Wenn der Verstellmechanismus die folgenden Komponenten aufweist:
- einen Zugkegel, wobei der Zugkegel mittig geführt und ausgebildet ist, vertikal bewegt zu werden,
- einen mechanischen Antrieb, der den Zugkegel bewegen kann,
und wenn ferner die Messbacken relativ zur Zugrichtung des Zugkegels schräge Kontaktflächen aufweisen, wobei die schrägen Kontaktflächen derart ausgestaltet sind, dass sie bei einer vertikalen Bewegung des Zugkegels mit dem Zugkegel in Kontakt gebracht werden können; und wobei die schrägen Kontaktflächen so angeordnet sind, dass bei einer vertikalen Bewegung des Zugkegels die Messbacken orthogonal zur Bewegungsrichtung des Zugkegels weg von der Achse des Zugkegels bewegt werden können, kann die Position der Felgensegmente besonders zuverlässig und effektiv gesteuert werden.

Wenn der mechanische Antrieb ein Spindelantrieb oder ein hydraulischer Antrieb ist, kann die Bewegung des Zugkegels und daraus resultierend die Bewegung der Felgensegmente besonders präzise und stufenlos erfolgen.

Wenn die Mittel zum Messen der Felgensegmentposition ein Linearpotentiometer mit Taststange sind und die Taststange unter Belastung durch Federkraft mit einer Mitnehmerplatte in Kontakt gebracht wird, wobei die Mitnehmerplatte an dem Zugkegel befestigt ist, können alle Bewegungen des Zugkegels spielfrei abgetastet und die Felgensegmentposition zuverlässig ermittelt werden.

Die Aufgabe wird ferner erfindungsgemäß gelöst durch ein Felgensegment mit den Merkmalen des Anspruchs 14, wonach das Felgensegment eine T-förmige Grundform besitzt und wobei das Felgensegment im Bereich zwischen dem Steg und der Auflagefläche sowohl auf der Oberseite als auch auf der Unterseite jeweils eine Tasche aufweist, und wobei der Anpressstempel von der Richtung Auflagefläche nach außen verlängerten Schicht zwischen den Taschen gebildet wird. Die T-förmige Grundform in Verbindung mit den Taschen auf Ober- und Unterseite reduziert das Gewicht des Felgensegments und erhöht gleichzeitig die Handhabbarkeit des Felgensegments bei der Montage. Die auf die Auflagefläche wirkende Anpresskraft des Reifens wird dank der Bildung der Anpressstempels aus der nach außen verlängerten Schicht zwischen den Taschen über Vollmaterial bis an die Messbacken weitergeleitet und ungewollte Bauteilverformungen werden vermieden.

Die Aufgabe wird ferner erfindungsgemäß gelöst durch ein Verfahren mit den Merkmalen des Anspruchs 15, wonach zunächst eine Vorrichtung nach einem der Ansprüche 1 bis 13 bereitgestellt wird, der Reifen so auf der Vorrichtung positioniert wird, dass die Reifenschulter mit den Auflageflächen in Kontakt gebracht wird, wenn der Felgenschulterdurchmesser vergrößert wird. Die Felgensegmente werden radial nach außen bis zu einem Expansionsdurchmesser ausgesteuert und anschließend wieder in entgegengesetzter Richtung bis zu der Position bewegt, die sie vor dem Aussteuern eingenommen haben, wobei während dem Aussteuern der Felgensegmente radial nach außen und dem anschließenden Bewegen der Felgensegmente in entgegengesetzter Richtung die Felgensegmentposition gemessen und das Ergebnis der Messung elektronisch gespeichert wird. Während dem Aussteuern der Felgensegmente radial nach außen und dem anschließenden Bewegen der Felgensegmente in entgegengesetzter Richtung wird die auf die Felgensegmente wirkende Rückstellkraft gemessen und das Ergebnis der Messung elektronisch gespeichert werden.

Die Messungen der Felgensegmentposition und der Rückstellkraft können dabei kontinuierlich bzw. in regelmäßigen oder unregelmäßigen Intervallen erfolgen. Bevorzugterweise wird das Ergebnis der Messung durch Bildung eines arithmetischen Mittelwerts aus mehreren Messwerten ermittelt. Das ermittelte Ergebnis der Messung der auf die Felgensegmente wirkenden Rückstellkraft wird für mindestens einen vorgegebenen Werte der Felgensegmentposition ausgegeben.

Durch die Aufzeichnung der Rückstellkraft kann die Wulstanpresskraft in Abhängigkeit des Felgenschulterdurchmesser ermittelt werden und es ist möglich, die Kennlinie des Reifenwulstes stufenlos zu ermitteln. Zusätzlich kann aus den ermittelten Messwerten der Wulstanpresskraft in Abhängigkeit des Felgenschulterdurchmesser die Zugbeanspruchung des Drahtkerns des Reifens abgeleitet werden.

Wenn vor der Messung der auf die Felgensegmente wirkenden Rückstellkraft, die Felgensegmente einmalig radial nach außen bis zu einem Expansionsdurchmesser ausgesteuert und anschließend wieder in entgegengesetzter Richtung bis zu der Position bewegt werden, die sie vor dem Aussteuern eingenommen haben, ohne dass eine Messung der Rückstellkraft erfolgt, wird der Sitz des Reifens auf der Vorrichtung durch das einmalige Vorspannen des Reifens verbessert.

Wenn vor der Messung der auf die Felgensegmente wirkenden Rückstellkraft, die Felgensegmente zweimalig radial nach außen bis zu einem Expansionsdurchmesser ausgesteuert und jeweils anschließend wieder in entgegengesetzter Richtung bis zu der Position bewegt werden, die sie vor dem Aussteuern eingenommen haben, ohne dass eine Messung der Rückstellkraft erfolgt, wird der Sitz des Reifens auf der Vorrichtung durch das zweimalige Vorspannen des Reifens noch weiter verbessert.

Im Übrigen lassen sich die auf die Vorrichtung bezogenen Merkmale und Vorteile entsprechend auf das Verfahren übertragen, und umgekehrt, so dass an dieser Stelle auf weitere Wiederholungen verzichtet wird.

Die Aufgabe wird ferner erfindungsgemäß gelöst durch eine Anlage zur Durchführung eines Verfahrens der Ansprüche 15 bis 17 mit einer Vorrichtung nach einem der Ansprüche 1 bis 13, wobei die Anlage einen Schaltschrank, eine Kühlvorrichtung, einen Elektronikbildschirm, einen Messverstärker und ein Bedienfeld aufweist und wobei die Anlage eingerichtet ist, ein Verfahren nach einem der Ansprüche 11 bis 13 auszuführen.

### Figurenbeschreibung

Weitere Einzelheiten und Merkmale ergeben sich aus der nachfolgenden Beschreibung eines bevorzugten Ausführungsbeispiels in Verbindung mit den Figuren. Hierbei können die jeweiligen Merkmale für sich allein oder zu mehreren in Kombination miteinander verwirklicht sein. Die Möglichkeiten, die Aufgabe zu lösen, sind nicht auf das Ausführungsbeispiel beschränkt. So umfassen beispielsweise Bereichsangaben stets alle - nicht genannten - Zwischenwerte und alle denkbaren Teilintervalle. Das Ausführungsbeispiel ist in den Figuren schematisch dargestellt. Gleiche Bezugszeichen in den einzelnen Figuren bezeichnen dabei gleiche oder funktionsgleiche bzw. hinsichtlich ihrer Funktionen einander entsprechende Elemente. Im Einzelnen zeigt:
- FIG. 1: einen Querschnitt der erfindungsgemäßen Vorrichtung zur Messung der Wulstanpresskraft eines Reifens;
- FIG. 2: eine Draufsicht auf eine erfindungsgemäße Anordnung der Felgensegmente der Vorrichtung aus FIG. 1;
- FIG. 3: einen Querschnitt eines Felgenelements der Vorrichtung aus FIG. 1;
- FIG. 4: eine Ansicht von schräg oben auf eine Anordnung von Felgensegmenten aus dem Stand der Technik;
- FIG. 5: einen schematischen Verlauf des Felgenschulterdurchmessers in Abhängigkeit der Zeit während einer Messung in der Betriebsart "Automatik 1" aus einem erfindungsgemäßen Verfahren zur Messung der Wulstanpresskraft eines Reifens;
- FIG. 6: einen schematischen Verlauf des Felgenschulterdurchmessers in Abhängigkeit der Zeit während einer Messung in der Betriebsart "Automatik 2" aus einem weiteren erfindungsgemäßen Verfahren zur Messung der Wulstanpresskraft eines Reifens;
- FIG. 7: einen schematischen Verlauf des Felgenschulterdurchmessers in Abhängigkeit der Zeit während einer Messung in der Betriebsart "Automatik 3" aus einem erfindungsgemäßen Verfahren zur Messung der Wulstanpresskraft eines Reifens.

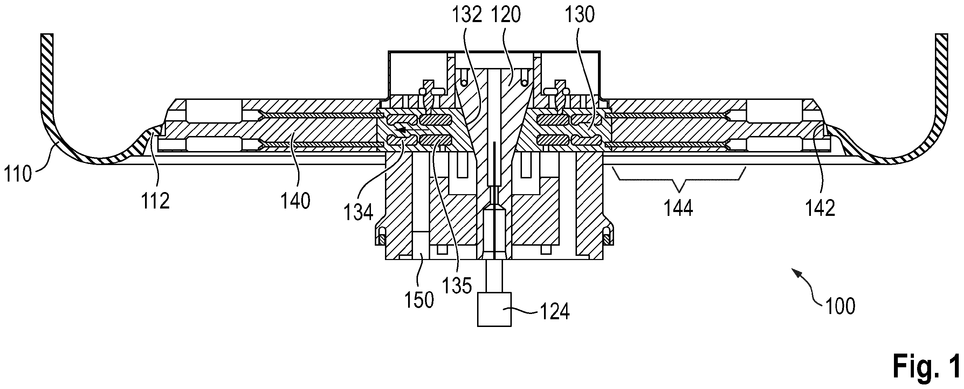

FIG. 1 zeigt eine erfindungsgemäße Vorrichtung 100 zur Messung der Wulstanpresskraft eines Reifens 110, insbesondere der eines Autoreifens. Die Wulstanpresskraft ist die von der Reifenschulter 112 auf die Felgenschulter wirkende Kraft und wird in Abhängigkeit vom Felgenschulterdurchmesser ermittelt. Die Vorrichtung 100 weist hierfür einen mittig geführten Zugkegel 120 auf, welcher in axialer, d. h. hier in vertikaler Richtung bewegt wird. Die Form des Zugkegels 120 entspricht der eines geraden Kreiskegels. Der Zugkegel 120 wird bevorzugt durch einen Spindelantrieb bewegt. Denkbar auch ein hydraulischer Antrieb zum Bewegen des Zugkegels 120.

Bei einer ausreichend weiten Bewegung nach unten wird der Zugkegel 120 mit mehreren radial über den Umfang verteilten Messbacken 130 in Kontakt gebracht. In die Messbacken integriert sind Kraftaufnehmer 134, die aus Dehnungsmessstreifen 135 in einer Brückenschaltung bestehen. Bevorzugt weist die Vorrichtung 100 acht um 45° zueinander versetzte Messbacken 130 auf. Der Kontakt mit dem Zugkegel 120 erfolgt hierbei über relativ zur Zugrichtung des Zugkegels 120 schräge Kontaktflächen 132, wobei der Winkel der schrägen Kontaktfläche 132 bevorzugt dem halben Öffnungswinkel des Zugkegels 120 entspricht. Hierdurch wird eine möglichst große Kontaktfläche zwischen dem Zugkegel 120 und den Messbacken 130 realisiert. Wird die nach unten gerichtete Bewegung des Zugkegels 120 über den bloßen Kontakt mit den schrägen Kontaktflächen 132 hinaus weitergeführt, bewirkt die auf die schrägen Kontaktflächen 132 wirkende Kraft eine Bewegung der Messbacken 130 orthogonal zur Bewegungsrichtung des Zugkegels 120 und weg von der Achse des Zugkegels 120. Die Messbacken 130 werden auf diese Weise radial nach außen ausgesteuert.

An mehreren Messbacken 130 sind Kraftaufnehmer 134 angebracht, welche die Verformung der Messbacken 130 messen, woraus auf die auf die Felgensegmente 130 wirkende Rückstellkraft und damit auf die Wulstanpresskraft des Reifens 110 geschlossen werden kann, wobei bei der Messung hauptsächlich Rückstellkräfte aufgrund der Reifenschulterspannung über die Felgensegmente 140 auf die Messbacken 130 wirken. Die Kraftaufnehmer 134 können bspw. realisiert werden, indem Dehnungsmessstreifen 135 in die Messbacke 130 selbst integriert sind. Denkbar ist auch das Aufbringen der Dehnungsmessstreifen 135 auf Segmente der Messbacken 130, die unter der Einwirkung von Zug- bzw. Druckkräften eine Dehnung bzw. eine Stauchung erfahren und Teil einer Brückenschaltung sind. Bevorzugt wird die Messung der auf die Messbacken wirkenden Zug- bzw. Drucckraft über eine Viertelbrücke mit mindestens einem Dehnungsmessstreifen 135, besonders bevorzugt über eine Halbbrücke mit mindestens zwei Dehnungsmessstreifen 135 und insbesondere bevorzugt über eine Vollbrücke mit mindestens vier Dehnungsmessstreifen 135 realisiert. Denkbar ist auch der Einsatz einer Kombination aus zwei Vollbrücken mit jeweils vier Dehnungsmessstreifen 135 oder Kombinationen aus verschiedenen Brückenschaltungen.

Weiterhin sind an den Messbacken 130 Felgensegmente 140 befestigt, vorzugsweise mittels eines Schnellverschlusses, bspw. eines Spannverschlusses. Ebenso denkbar ist eine Schraubenverbindung. Die Felgensegmente 140 werden bei einer nach unten gerichteten Bewegung des Zugkegels 120 zusammen mit den Messbacken 130 radial nach außen ausgesteuert. Als Resultat des radialen Aussteuerns der Felgensegmente 140 nach außen kommen die nach außen weg vom Zugkegel 120 gerichteten Auflageflächen 142 der Anpresstempel 141 mit der Reifenschulter 112 in Kontakt, wodurch die durch die Reifenschulter 112 vermittelte und auf die Auflageflächen 142 wirkende Wulstanpresskraft des Reifens 110 ebenso auf die Messbacken 130 wirkt und von den Dehnungsmessstreifen 135 erfasst wird.

Im Betrieb sind die Auflageflächen 142 zunächst nicht in Kontakt mit der Reifenschulter 112, sondern gelangen erst durch das radiale Aussteuern der Felgensegmente 140 nach außen allmählich in Kontakt mit der Reifenschulter 112. Durch das radiale Aussteuern der Felgensegmente 140 nach außen verändert sich der Durchmesser des durch die Auflageflächen 142 gebildeten Rings, sprich der Felgenschulterdurchmesser. Die Vorrichtung 100 weist weiterhin Mittel zum Messen der Felgensegmentposition 150 auf. Aus der Felgensegmentposition kann in Verbindung mit der Geometrie der Felgensegmente 140 der Felgenschulterdurchmesser ermittelt werden.

Die Mittel zum Messen der relativen Felgensegmentposition 150 sind vorzugsweise durch ein Linearpotentiometer mit einer Taststange realisiert. Die Taststange wird bei dieser beispielhaften Umsetzung mit Hilfe von Federkraft an eine Mitnehmerplatte gedrückt, die an dem Zugkegel 120 befestigt ist. So können alle Bewegungen des Zugkegels 120 spielfrei abgetastet werden. Im Betrieb werden während einer Messung sowohl die auf die Felgensegmente 140 wirkende Rückstellkraft als auch die Änderung des Felgenschulterdurchmessers gemessen. Hierdurch kann die Wulstanpresskraft des Reifens 110 in Abhängigkeit vom Felgenschulterdurchmesser ermittelt werden.

Durch den vereinfachten Wechsel der Felgensegmente 140 kann die Vorrichtung schnell an unterschiedliche Reifenwulstdurchmesser und/oder Reifenwulstgeometrien angepasst werden. Der Krümmungsradius der Auflagefläche 142 am Sitz der Reifenschulter 112 entspricht dem jeweiligen Radius einer Felge, auf welcher der Reifen 110 betrieben werden soll.

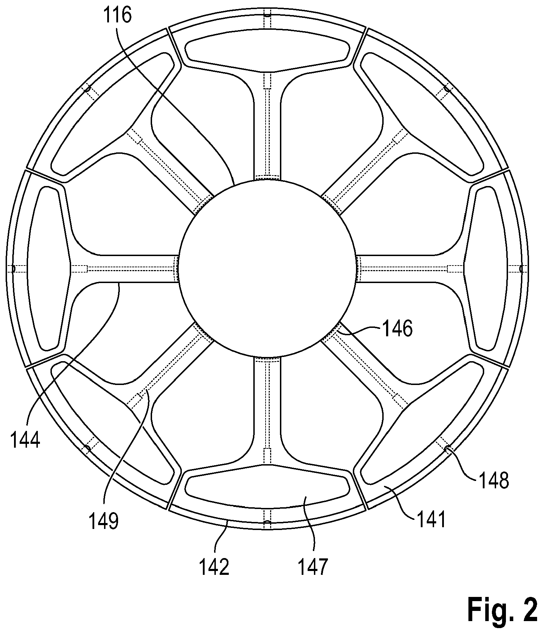

FIG. 2 zeigt eine bevorzugte Anordnung von acht Felgensegmenten 140. Die Felgensegmente 140 sind dabei radial um den Umfang nach außen abstehend an der zentralen Nabe 116 angebracht. Weiterhin ist der Richtung zentraler Nabe 116 weisende Teil als Steg 144 ausgebildet. Die Felgensegmente 140 weisen bevorzugt eine T-förmige Grundform auf, wobei der Steg 144 im Wesentlichen quaderförmig ist, wobei die Breite des Quaders bevorzugt weniger als 1/6 der Breite der Auflagefläche 142 beträgt. Denkbar sind aber auch Stege, welche im Verhältnis zur Auflagefläche 142 noch breiter bzw. schmaler als das genannte Beispiel sind. Besonders günstig ist es, die Kantenlängen des Quaders so zu wählen, dass der Quader von einer Hand umschlossen werden kann.

Bevorzugt sind benachbarte Stege 144 gleichmäßig so voneinander beabstandet, dass der Abstand zwischen den benachbarten Stegen 144 um ein Vielfaches größer ist als der Abstand zwischen den entsprechenden benachbarten Anpressstempeln 141 am äußeren Rand der Anordnung. Durch das Zusammenwirken aus Beabstandung und Geometrie der Felgensegmente 140 entstehen Freiräume zwischen benachbarten Stegen 144. Bevorzugterweise sind die entstehenden Freiräume so dimensioniert, dass bei der Montage bzw. Demontage mit der Hand hineingefasst und das Felgensegment 140 mit der Hand festgehalten werden kann. Vorzugsweise weist der Steg 144 an dem der Messbacke 130 zugewandtem Ende eine Montagefläche 146 für die Befestigung an den Messbacken 130 auf. Sowohl auf Ober- und Unterseite der einzelnen Felgensegmente 140 sind Taschen 147 ausgespart, um Gewicht zu reduzieren.

Die Felgensegmente 140 weisen weiterhin jeweils eine Auflagefläche 142 auf, die bei einer Messung in Kontakt mit der Reifenschulter 112 (nicht in FIG. 2 gezeigt) tritt. Weiterhin sind in der dem Reifen zugewandten Außenfläche jeweils zwei Montagebohrungen 148 vorgesehen. Die Montagebohrungen 148 münden jeweils in eine der Taschen 147 und sind relativ zum Flächenschwerpunkt der Auflagefläche 142 in der gleichen Position angeordnet wie ein korrespondierender Montagekanal 149, der durch den Steg 144 des Felgensegment 140 bis hin zur Montagefläche 146 reicht. Auf diese Weise wird eine durchgängige Aussparung von der dem Reifen zugewandten Außenfläche bis hin zur Montagefläche 146 gebildet. Die Montagefläche 146 ist so über die Außenfläche des Felgensegments 140 zugänglich. Ein Wechsel der Felgensegmente 140 ist dadurch weiter vereinfacht, da das Felgensegment 140 aufgrund der Geometrie und der Beabstandung mit einer Hand gehalten und ein entsprechendes Werkzeug durch die aus Montagebohrung 148 und Montagekanal 149 gebildete durchgehende Aussparung bis zur Schraube geführt werden kann.

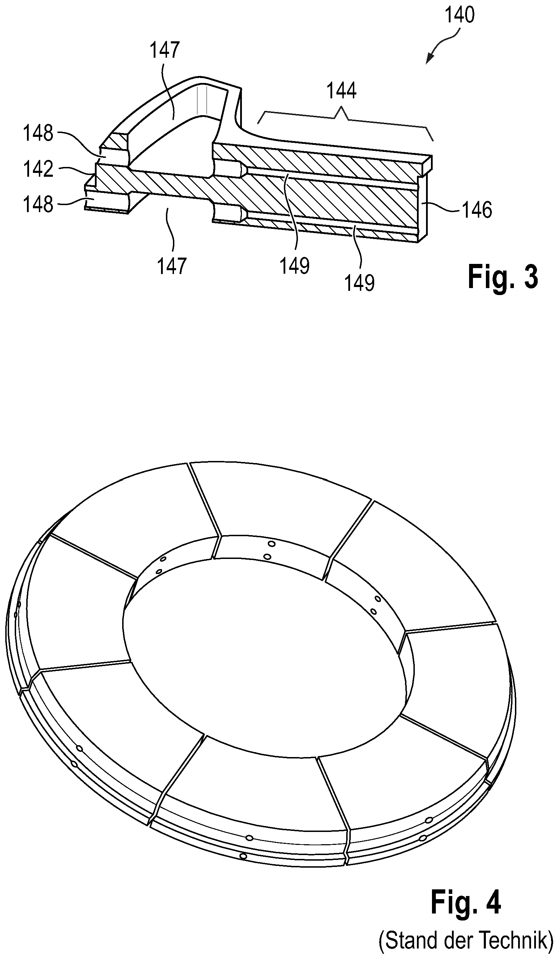

FIG. 3 zeigt ein Felgensegment 140 der Vorrichtung 100. Die Geometrie der Auflagefläche 142 mit dem umlaufenden Vorsprung verhindert ein Abrutschen des Wulstes. Der Steg 144 wird von den beiden Montagekanälen 149 durchzogen und weist am der Messbacke 130 (nicht in FIG. 3 gezeigt) zugewandtem Ende eine Montagefläche 146 auf. Die mit den Montagekanälen 149 korrespondierenden Montagebohrungen 148 befinden sich im äußeren Bereich jeweils zwischen den Taschen 147 und der dem Reifen 110 zugewandten Fläche des Felgensegments 140. Die auf die Auflagefläche 142 wirkende Anpresskraft des Reifens 110 wird dank dieser Ausgestaltung über Vollmaterial bis an die Messbacken 130 weitergeleitet und ungewollte Bauteilverformungen vermieden.

FIG. 4 zeigt eine aus dem Stand der Technik bekannte Anordnung von Felgensegmenten zur Messung der Wulstanpresskraft eines Reifens 110. Die aufgrund des hohen Gewichts und geometriebedingt bei der Montage nicht sicher handhabbaren massiven Felgensegmente zeigen die Nachteile des Standes der Technik auf.

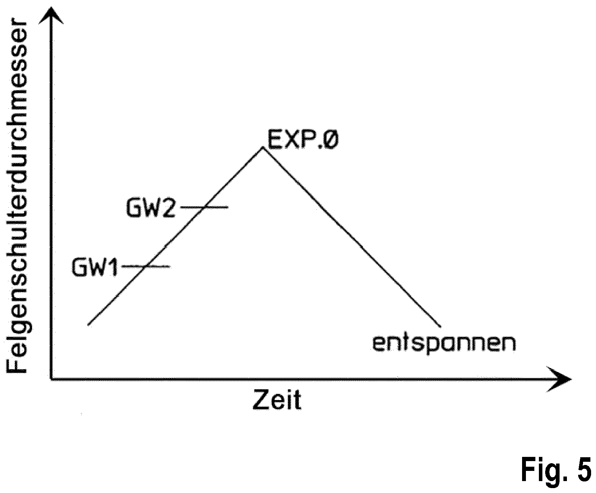

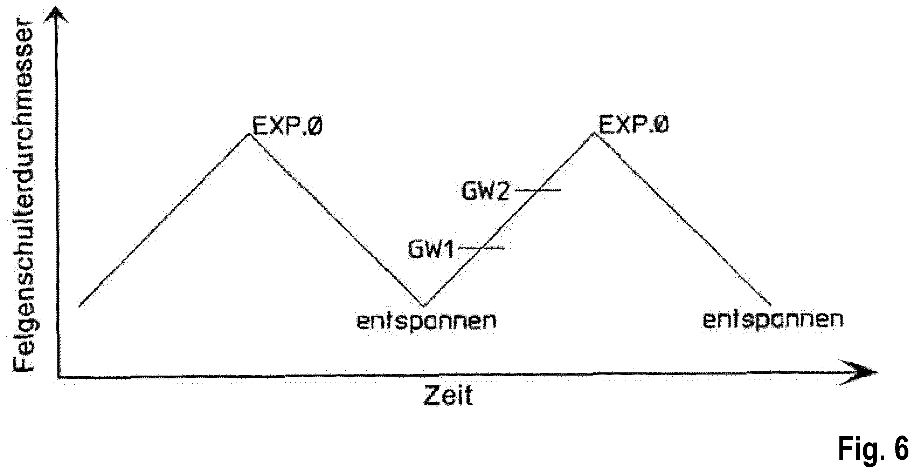

FIG. 5 zeigt den Ablauf einer Messung in der Betriebsart "Automatik 1", die während der Anwendung eines erfindungsgemäßen Verfahrens 200 zur Messung der Wulstanpresskraft eines Reifens 110 (nicht in FIG. 6 gezeigt) durchgeführt wird. Während die Felgensegmente 140 (nicht in FIG. 5 gezeigt) bis zu einem vorgegebenen Expansionsdurchmesser (EXP.Ø) ausgesteuert werden, werden nacheinander die Grenzwertmessungen 1 (GW1) und 2 (GW2) durchgeführt. Die Grenzwerte GW1 und GW 2 entsprechen dabei der vom Hersteller für einen sicheren Betrieb des Reifens 110 auf der Felge vorgegebenen Ober- bzw. Untergrenze. Nachdem der vorgegebene Expansionsdurchmesser erreicht wurde, werden die Felgensegmente 140 wieder in die entgegengesetzte Richtung bis in die Position bewegt, die sie vor dem Aussteuern eingenommen haben. Der Felgenschulterdurchmesser verkleinert sich so und der Reifen 110 wird entspannt.

FIG. 6 zeigt den Ablauf einer Messung in der Betriebsart "Automatik 2", die während der Anwendung eines erfindungsgemäßen Verfahrens 200 zur Messung der Wulstanpresskraft eines Reifens 110 (nicht in FIG. 6 gezeigt) durchgeführt wird. Im Gegensatz zum in FIG. 5 gezeigten Ablauf werden am Anfang der Messung die Felgensegmente 140 (nicht in FIG. 6 gezeigt) einmalig bis zu einem vorgegebenen Expansionsdurchmesser (EXP.Ø) ausgesteuert und der Reifen 110 anschließend entspannt, ohne dass eine Messung der Rückstellkraft durchgeführt wird.

Erst im Anschluss wird eine Messung gleich der in FIG. 5 beschriebenen durchgeführt. Auf diese Weise wird der Reifen 110 vor der eigentlichen Messung der Wulstanpresskraft einmal vorgespannt, wodurch der Sitz des Reifens 110 auf der Vorrichtung 100 verbessert wird.

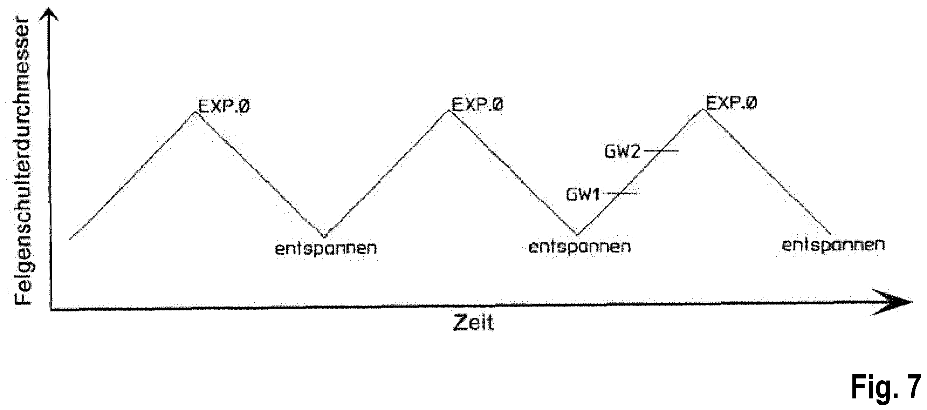

FIG. 7 zeigt den Ablauf einer Messung in der Betriebsart "Automatik 3", die während der Anwendung eines erfindungsgemäßen Verfahrens 200 zur Messung der Wulstanpresskraft eines Reifens 110 (nicht in FIG. 6 gezeigt) durchgeführt wird. Im Gegensatz zum in FIG. 6 gezeigten Ablauf werden am Anfang der Messung die Felgensegmente 140 (nicht in FIG. 6 gezeigt) zweimalig bis zu einem vorgegebenen Expansionsdurchmesser (EXP.Ø) ausgesteuert und der Reifen 110 jeweils anschließend entspannt, ohne dass eine Messung der Rückstellkraft durchgeführt wird.

Erst im Anschluss wird eine Messung gleich der in FIG. 5 beschriebenen durchgeführt. Auf diese Weise wird der Reifen 110 vor der eigentlichen Messung der Wulstanpresskraft zweimal vorgespannt, wodurch der Sitz des Reifens 110 auf der Vorrichtung 100 nochmals verbessert wird.

### Bezugszeichenl iste

- 100: Vorrichtung
- 110: Reifen
- 112: Reifenschulter
- 116: zentrale Nabe
- 120: Zugkegel
- 124: mechanischer Antrieb
- 130: Messbacke
- 132: schräge Kontaktflächen
- 134: Kraftaufnehmer
- 135: Dehnungsmessstreifen
- 140: Felgensegmente
- 141: Anpressstempel
- 142: Auflagefläche
- 144: Steg
- 146: Montagefläche
- 147: Tasche
- 148: Montagebohrung
- 149: Montagekanal
- 150: Mittel zum Messen der Felgensegmentposition
- 200: Verfahren
- 300: Anlage

## Patentansprüche

1. Vorrichtung (100) zur Messung der Wulstanpresskraft eines Reifens (110), insbesondere der eines Autoreifens,
wobei die Vorrichtung (100) die folgenden Komponenten aufweist:
- eine zentrale Nabe (116);
- eine Mehrzahl von Felgensegmenten (140), wobei die Felgensegmente (140) radial um den Umfang nach außen abstehend an der zentralen Nabe (116) angebracht sind;
und wobei das jeweilige Felgensegment (140) einen zur zentralen Nabe (116) gerichteten Steg (144) und einen von der zentralen Nabe (116) weg weisenden Anpressstempel (141) mit einer Auflagefläche (142) zum Kontakt mit einer Reifenschulter (112) eines zu vermessenden Reifens (110) aufweist;
und wobei benachbarte Stege (144) gleichmäßig so voneinander beabstandet sind, dass der Abstand zwischen den benachbarten Stegen (144) größer ist als der Abstand zwischen den entsprechenden benachbarten Anpressstempeln (141);
- einen Verstellmechanismus, wobei die Felgensegmente (140) über den Verstellmechanismus gemeinsam in jeweils radialer Richtung verschiebbar sind;
- mindestens einen Kraftaufnehmer (134), wobei der mindestens eine Kraftaufnehmer (134) eingerichtet ist, auf die Felgensegmente (140) wirkende Rückstellkräfte zu messen;
- optional Mittel zum Messen der Felgensegmentposition (150), wobei die Mittel zum Messen der Felgensegmentposition (150) derart eingerichtet sind, dass sie die relativ zu einer Startposition eingenommene Position eines Felgensegments (140) messen können.

2. Vorrichtung (100) nach Anspruch 1,
wobei die jeweilige Auflagefläche (142) des Felgensegments (140) einen Ringabschnitt bildet;
und wobei die Gesamtheit der Auflageflächen (142) aller Felgensegmente (140) einen Ring bildet.

3. Vorrichtung (100) nach einem der Ansprüche 1 oder 2,
wobei das jeweilige Felgensegment (140) eine T-förmige Grundform besitzt.

4. Vorrichtung (100) nach einem der Ansprüche 1 bis 3,
wobei das jeweilige Felgensegment (140) im Bereich zwischen dem Steg (144) und der Auflagefläche (142) sowohl auf der Oberseite als auch auf der Unterseite jeweils eine Tasche (147) aufweist;
und wobei der Anpressstempel (141) von der Richtung Auflagefläche (142) nach außen verlängerten Schicht zwischen den Taschen (147) gebildet wird.

5. Vorrichtung (100) nach einem der Ansprüche 1 bis 4,
wobei die Vorrichtung (100) eine Mehrzahl von Messbacken (130) aufweist,
und wobei das jeweilige Felgensegment (140) über eine Messbacke (130) mit der zentralen Nabe (116) verbunden ist;
und wobei der jeweilige Kraftaufnehmer (134) mit einer der Messbacken (130) verbunden ist.

6. Vorrichtung (100) nach dem Anspruch 5,
wobei der Steg (144) des Felgensegments (140) an dem der Messbacke (130) zugewandten Ende eine Montagefläche (146) aufweist;

7. Vorrichtung (100) nach dem Anspruch 6,
wobei das äußere dem Reifen (110) zugewandte Ende der Felgensegmente (140) mindestens zwei Montagebohrungen (148) aufweist, wobei die Montagebohrungen (148) jeweils in eine der Taschen (147) münden; und wobei der Steg (144) der Felgensegmente (140) mindestens zwei Montagekanäle (149) aufweist, wobei die Montagekanäle (149) in jeweils eine der Taschen (147) münden und bis zur Montagefläche (146) reichen; und wobei jeweils eine Montagebohrung (148) und ein Montagekanal (149) eine durchgehende Aussparung von der äußeren dem Reifen (110) zugewandte Fläche des Felgensegments (140) bis zur Montagefläche (146) des Stegs (144) bilden.

8. Vorrichtung (100) nach einem der Ansprüche 5 bis 7,
wobei der mindestens eine Kraftaufnehmer (134) eine Brückenschaltung mit mindestens zwei Dehnungsmessstreifen (135) aufweist;
und wobei die Dehnungsmessstreifen (135) mit einer Messbacke (130) verbunden sind.

9. Vorrichtung (100) nach dem Anspruch 8,
wobei die Vorrichtung (100) acht Felgensegmente (140) und acht Messbacken (130) aufweist, wobei vier der Messbacken (130) Dehnungsmessstreifen (135) aufweisen;
und wobei die Felgensegmente (140) jeweils um 45° versetzt zueinander angeordnet sind;
und wobei vorzugsweise vier Dehnungsmessstreifen (135) Teil einer Vollbrücke sind.

10. Vorrichtung (100) nach dem Anspruch 8,
wobei die Vorrichtung (100) acht Felgensegmente (140) und acht Messbacken (130) aufweist;
und wobei die acht Messbacken (130) Dehnungsmessstreifen (135) aufweisen; und wobei vorzugsweise jeweils vier Dehnungsmessstreifen (135) Teil einer Vollbrücke sind.

11. Vorrichtung (100) nach einem der Ansprüche 5 bis 10,
wobei der Verstellmechanismus folgende Komponenten aufweist:
- einen Zugkegel (120), wobei der Zugkegel (120) mittig geführt ist und wobei der Zugkegel (120) ausgebildet ist, vertikal bewegt zu werden;
- einen mechanischen Antrieb (124), wobei der mechanische Antrieb (124) eingerichtet ist, den Zugkegel (120) zu bewegen;
und wobei die Messbacken (130) relativ zur Zugrichtung des Zugkegels (120) schräge Kontaktflächen (132) aufweisen, wobei die schrägen Kontaktflächen (132) derart ausgestaltet sind, dass sie bei einer vertikalen Bewegung des Zugkegels (120) mit dem Zugkegel (120) in Kontakt gebracht werden können;
und wobei die schrägen Kontaktflächen (132) so angeordnet sind, dass bei einer vertikalen Bewegung des Zugkegels (120) die Messbacken (130) orthogonal zur Bewegungsrichtung des Zugkegels (120) weg von der Achse des Zugkegels (120) bewegt werden können;

12. Vorrichtung (100) nach dem Anspruch 11,
wobei der mechanische Antrieb (124) ein Spindelantrieb oder ein hydraulischer Antrieb ist;

13. Vorrichtung (100) nach einem der Ansprüche 1 bis 12,
wobei die Mittel zum Messen der Felgensegmentposition (150) ein Linearpotentiometer mit einer Taststange sind;
und wobei die Taststange eingerichtet ist, unter Belastung durch Federkraft mit einer Mitnehmerplatte in Kontakt gebracht werden zu können;
und wobei die Mitnehmerplatte an dem Zugkegel (120) befestigt ist.

14. Felgensegment (140) zur Verwendung in einer Vorrichtung (100) nach einem der Ansprüche 1 bis 13,
wobei das Felgensegment (140) eine T-förmige Grundform mit einem Steg (144) und mit einem eine Auflagefläche (142) aufweisenden Anpressstempel (141) besitzt;
und wobei vorzugsweise das Felgensegment (140 in einem Bereich zwischen dem Steg (144) und der Auflagefläche (142) sowohl auf der Oberseite als auch auf der Unterseite jeweils eine Tasche (147) aufweist;
und wobei vorzugsweise der Anpressstempel (141) von einer in Richtung Auflagefläche (142) nach außen verlängerten Schicht zwischen den Taschen (147) gebildet wird.

15. Verfahren (200) zur Messung der Wulstanpresskraft eines Reifens (110), insbesondere der eines Autoreifens, wobei das Verfahren (200) die folgenden Schritte aufweist:
15.1 eine Vorrichtung (100) nach einem der vorhergehenden Ansprüche 1 bis 13 wird bereitgestellt;
15.2 der Reifen (110) wird so auf der Vorrichtung (100) positioniert, dass die Reifenschulter (112) mit den Auflageflächen (142) in Kontakt gebracht wird, wenn der Durchmesser des durch die Auflageflächen (142) der Felgensegmente (140) verlaufenden Kreises vergrößert wird;
15.3 die Felgensegmente (140) werden radial nach außen bis zu einem Expansionsdurchmesser ausgesteuert und anschließend wieder in entgegengesetzter Richtung bis zu der Position bewegt, die sie vor dem Aussteuern eingenommen haben; wobei während dem Aussteuern der Felgensegmente (140) und dem anschließenden Bewegen der Felgensegmente (140) in entgegengesetzter Richtung die Felgensegmentposition gemessen und das Ergebnis der Messung elektronisch gespeichert wird; und wobei während dem Aussteuern der Felgensegmente (140) und dem anschließenden Bewegen der Felgensegmente (140) in entgegengesetzter Richtung die auf die Felgensegmente (140) wirkende Rückstellkraft gemessen und das Ergebnis der Messung elektronisch gespeichert wird;
15.4 das Ergebnis der gespeicherten Messung der auf die Felgensegmente (140) wirkenden Rückstellkraft wird für mindestens einen vorgegebenen Wert der Felgensegmentposition ausgegeben.
